# EUROPEAN PATENT APPLICATION

(11) **EP 4 756 740 A1**
(43) Date of publication of application: **10.06.2026**
(21) Application number: 24217558.6
(22) Date of filing: 04.12.2024
(51) Int. Cl.: G06V 20/56, G06V 10/26, G06V 10/82

(54) **GENERATION OF THREE DIMENSIONAL TRAFFIC OBJECTS FROM TRAFFIC IMAGES**

(71) Applicant: dSPACE SE & Co. KG, 33102 Paderborn (DE)
(72) Inventor: Bhatt, Hitarth, 33102 Paderborn (DE); Burdorf, Sven, 33102 Paderborn (DE)

(57) **Abstract**

Disclosed is a method of testing an ECU (302). The ECU comprises an automated control module (304) adapted for controlling components of a vehicle. The method comprises receiving (200) a roadway image (122) containing a traffic object (124). The method further comprises receiving (202) a bounding box (126) identifying the traffic object. The method further comprises receiving (204) a text specification (130) of a camera flight around the traffic object. The method further comprises generating (206) a traffic object video (132) of the camera flight around the traffic object by inputting the roadway image, the bounding box, and the text specification into a text2video artificial intelligence module (134). The method further comprises generating (208) a three-dimensional model (136) of the traffic object using an image to three-dimensional model module (138). The method further comprises providing (210) the three-dimensional model of the traffic object for the ECU testing.

## Description

### FIELD OF THE INVENTION

The invention relates to the field of training of vehicle electronic control units, in particular the training of vehicle electronic control units using images.

### BACKGROUND

Training electronic control units (ECUs) for vehicles using images may use machine learning techniques to enable ECUs to perform such tasks as object recognition, the control of one or more components of a vehicle, or even autonomous driving. This process typically begins with collecting a vast dataset of vehicle-related images, such as road conditions, traffic signs, and various driving scenarios. These images are then annotated to highlight relevant features and objects. The annotated data is fed into neural networks, which are trained to recognize patterns and make decisions based on visual inputs. Through iterative training and validation, the ECUs learn to interpret and respond to real-world driving situations with increased accuracy and efficiency. This visual-based training improves the ECU's ability to support systems such as advanced driver assistance systems (ADAS), enhancing overall vehicle safety and performance.

### SUMMARY OF THE INVENTION

The invention provides for a method of testing an ECU, a vehicle testing system, and a computer program in the independent claims. Embodiments are given in the dependent claims.

In one aspect there is a method of testing an ECU. The ECU comprises an automated control module adapted for controlling components of a vehicle. The method comprises receiving a roadway image containing a traffic object. The method further comprises receiving a bounding box for identifying the traffic object. The method further comprises receiving a text specification of a camera flight around the traffic object. The method further comprises generating a traffic object video of the camera flight around the traffic object by inputting the roadway image, the bounding box, and the text specification into a text2video artificial intelligence module. The method further comprises generating a three-dimensional model of the traffic object by inputting the traffic object video into an image to three-dimensional model module. The method further comprises providing the three-dimensional model of the traffic object for the ECU testing.

In another aspect, a vehicle testing system is disclosed. The vehicle testing system comprises a memory storing machine-executable instructions. The vehicle testing system further comprises a computational system. Execution of the machine-executable instructions causes the computational system to perform an example of the method.

In another aspect, a computer program comprising machine-executable instructions is disclosed. The machine-executable instructions are configured for causing a computational system to perform an example of the method.

### BRIEF DESCRIPTION OF THE DRAWINGS

In the following, examples are described in greater detail making reference to the drawings in which:
Fig. 1 illustrates an example of a vehicle testing system.
Fig. 2 shows a flow chart which illustrates a method of operating the vehicle testing system of Fig. 1.
Fig. 3 illustrates a further example of a vehicle testing system.
Fig. 4 shows a flow chart which illustrates a method of operating the vehicle testing system of Fig. 3.
Fig. 5 shows a functional diagram which illustrates the generation of a three-dimensional model from a roadway image.

### DETAILED DESCRIPTION

In the following, similar elements are denoted by the same reference numerals.

In one aspect, a method of testing an ECU, or electronic control unit, is disclosed. The ECU comprises an automated control module adapted for controlling components of a vehicle. The automated control module may for example be used to implement a driver assistance or an automated driving program or functionality for the vehicle.

The method comprises receiving a roadway image containing a traffic object. A roadway image as used herein encompasses an image or series of images such as a video, which depict a scene of a roadway or place where a vehicle is able to drive. A traffic object is an object adjacent to a roadway or street that may interact with a vehicle driving on the roadway or street in some fashion. For example, a traffic object may include other vehicles, obstructions, traffic signs, pedestrians, people riding bicycles, or other objects. The method further comprises receiving a bounding box for identifying the traffic object. The identification of the traffic object may be received from a user interface where the bounding box was provided or defined; for example by a user interface. In other examples, the bounding box may be generated automatically.

For example, there are pre-existing convolutional neural networks which will identify different objects within an image. Particularly they provide a label as well as a bounding box. The bounding box may for example be generated by one of these pre-existing or pre-trained convolutional neural networks for identifying objects in general. Traffic objects may for example therefore be identified in the roadway image without the use of specialized software. The method further comprises receiving a text specification of a camera flight around the traffic object. The text specification may be received in different fashions in different examples. In one example, the text specification could be predefined and based on the location of the object within the roadway image. In other examples a more complicated procedure may be used. In one example, key points for the camera's position, movement and orientation relative to the object may be established or may be predefined. A series of waypoints where the camera will fly around the object could be specified to specify its three-dimensional position in each keyframe finding for example how far above, below or circling the object is. These series of waypoints may for example be used to form the text specification of the camera flight.

The bounding box for identifying the traffic object may be useful in this case. For example the bounding box may help to identify the object's center and approximate dimensions. This may enable the adjustment of the object's center as a reference point using this to set the camera position and then rotate smoothly around it. For example, the text specification could adjust the camera angle, zoom, and speed as it makes this path around the traffic object.

The method further comprises generating a traffic object video of the camera flight around the traffic object by inputting the roadway image, the bounding box, and the text specification into a text2video artificial intelligence module. From the single view of the traffic object in the roadway image, the text2video artificial intelligence module is then able to generate a synthetic traffic object video, which shows the traffic object from different views from the camera flight around the traffic object.

The method further comprises generating a three-dimensional model of the traffic object by inputting the traffic object video into an image to three-dimensional model module. The three-dimensional model module is configured to take a camera flight around an object and then to generate a three-dimensional model of the traffic object. The method further comprises providing the three-dimensional model of the traffic object for the ECU testing. This may for example, in some examples, include adding the three-dimensional model to a database, which is then used for generating or performing ECU testing on the fly. In other examples, the three-dimensional model may be used directly for ECU testing.

This example has a variety of potential benefits. One benefit is that the three-dimensional model may be generated from a single roadway image and may be useful in generating additional test scenarios for the ECU. Providing the three-dimensional model enables the inclusion of the traffic object from a variety of angles and a more realistic way to enable training of the ECU. Normally it would be difficult and expensive to have additional three-dimensional models which could be realistically added to a test scenario for the ECU testing. This method may provide an automated or nearly automated means of producing three-dimensional models for ECU testing.

In another example, the method further comprises receiving a sequence of traffic images. The sequence of traffic images may for example be a video recording of a vehicle or other object moving through traffic. The method further comprises receiving a trajectory of the traffic object registered to the sequence of traffic images. This registration may for example identify the location of the traffic object within individual images or frames of the sequence of traffic images. The method further comprises generating a sequence of modified traffic images by inserting the traffic object into the sequence of traffic images using the three-dimensional model and the trajectory. The method further comprises providing the sequence of modified traffic images for the ECU testing. This example may be beneficial because it may provide for a means of customizing the sequence of modified traffic images for particular ECU testing to perform various scenarios. The insertion of the three-dimensional model allows this to be done in an arbitrary and flexible way. This may for example provide for increased data for the ECU testing and provide for better development or testing of the ECU.

In another example, providing the sequence of modified traffic images for the ECU testing comprises controlling a simulation program to test operation of the ECU using the sequence of modified traffic images. The method further comprises detecting faults in the operation of the ECU during the controlling of the simulation program.

Faults in the operation of the ECU may for example be a failure to recognize objects, people, or other vehicles in the second sequence of traffic images or it may also represent incorrect control decisions or commands generated by the ECU in response to being tested with the simulation program and the second sequence of traffic images. This example may be beneficial because the ECU can be tested using the second set of environmental conditions without the need to generate a new set of image labels.

In another example, the method further comprises to generate modification commands configured for modifying the programming of the ECU using the detected faults. The method further comprises modifying the ECU using the modification commands. For example, the identification of the faults may be used for training Al or machine learning modules which are used to form the automated control module. This may for example provide for an improved means of training an automotive or vehicle ECU.

In another example, providing the sequence of modified traffic images for the ECU testing comprises adding the sequence of modified traffic images to an image sequence library designated for the ECU testing. This example may be beneficial because it may provide for an image sequence library which may be used to flexibly test the ECU for different scenarios.

In another example, the insertion of the traffic object into the sequence of traffic images is performed using a video editing module. The method further comprises determining a camera view position of the sequence of traffic images using the video editing module. The method further comprises positioning the traffic object in the sequence of traffic images by controlling the video editing module with the trajectory of the traffic object and the camera view positions to provide the sequence of modified traffic images. This example may be beneficial because it may provide a realistic means of inserting the traffic into the sequence of modified traffic images.

The video editing module may perform a variety of tasks which may add or enhance the insertion of the traffic object into the sequence of traffic images. For example, the video editing software may perform camera tracking that may use motion tracking software to analyze a video and track the movement of the camera view relative to the scene. Often times with a vehicle the camera may have a fixed relationship to the vehicle moving. In this case, the position of the camera relative to the scene may be fixed. The video editing software in some examples may also use or incorporate the three-dimensional model integration. For example, the model may be aligned with the roadway in the video by matching the scale, position and orientation to the ground plane and surrounding objects.

The video editing module may also provide for lighting and shading or shadows of the three-dimensional model and also the effect of the object on shadows present in the sequence of traffic images. Virtual lights, which may be used to simulate the sun, or street lights or ambient light may be used to do this. Renderings of the three-dimensional model may be composting using commercially available software such as Adobe After Effects or Nuke to layer the rendered three-dimensional model on top of the original video footage. The video editing module may further perform various fine tuning in the blending, color grading, and additional effects such as a motion blur to make the three-dimensional object appear as part of the real-world environment depicted by the sequence of traffic images.

In another example, the method further comprises performing any one of the following to the sequence of modified traffic images using the video editing module: shading the inserted traffic object, lighting the inserted traffic object, shadow casting of the inserted traffic object, adding motion blur, and combinations thereof. Performing these various activities using the video editing module may provide for more realistic results.

In another example, the image to three-dimensional model module is a NeRF model. A NeRf, or neural radiance field model, works by transforming sets of two-dimensional image of an object into a three-dimensional representation. In this case, the traffic object video of the camera flight around the traffic object is used for the set of two-dimensional images. The NeRF model may also use, in addition to these images, the camera positions and orientations such as would be defined in the specification of the camera flight. In the NeRF model specifically, the three-dimensional model is encoded into a neural network. The neural network itself takes a three-dimensional coordinate in space and a viewing direction and predicts two key values for every point in space, which include the color and the density or opacity how solid the point is. The NeRF model itself may be used as the three-dimensional representation.

In another example, the image to three-dimensional model module is any one of the following: a photogrammetry model, a multi-view stereo model, a deep learning based three-dimensional reconstruction, Gaussian sliding model, and a mesh-based model. These actually are all very effective alternatives to the NeRF model. They provide alternative ways of implementing the three-dimensional model.

In another example, the method further comprises controlling the generation of the three-dimensional model using the text specification of the camera flight around the traffic object. This may for example be the case when the NeRF model is used to provide the three-dimensional representation.

In another example, the method further comprises receiving a traffic object segmentation identifying a boundary of the traffic object in the roadway image by putting the bounding box and traffic images into a segmentation module. Various image processing modules may be used to provide algorithms for providing the segmentation or it may be provided by an artificial intelligence module. For example, such things as thresholding and edge detection may be used. In edge detection a Canny or Sobel filter may be used to help detect the boundaries of an object within the bounding box. Various other algorithms such as a watershed algorithm, a color-based segmentation, which may for example use k-means clustering, can segment an object based on its color within a bounding box by grouping similar colors together. There also exist various convolutional or image processing neural networks, such as a U-Net, which have been trained in general to perform general segmentation techniques. For example, these neural networks may receive the image as input and output a binary mask which identifies or separates the background from the object.

The method further comprises removing a background of the traffic object using the traffic object segmentation before generating the three-dimensional model of the traffic object. This may for example be beneficial because it may provide for a higher quality three-dimensional model of the traffic object as well as only modeling the traffic object. This for example may facilitate insertion of the three-dimensional object or model into the sequence of traffic images.

The method further comprises storing the three-dimensional object in a traffic object database designated for the ECU testing. This example may be beneficial because it may provide for a means of adding a greater variety of traffic objects to test scenarios for the ECU testing.

In another aspect, the invention provides for a vehicle testing system. The vehicle testing system comprises a memory storing machine-executable instructions and a computational system. Execution of the machine-executable instructions causes the computational system to perform a method according to an example.

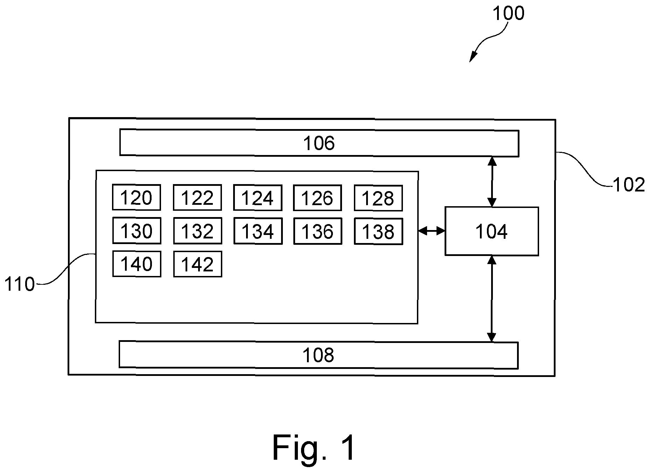

Fig. 1 illustrates an example of a vehicle testing system 100. In this example the vehicle testing system comprises a computer 102 with a computational system 104. The computer 102 may represent one or more computers located at one or more locations. Likewise, the computational system 104 may represent one or more computational systems or computing cores at one or more locations. The computational system 104 is shown as being in communication with an optional hardware interface 106. The optional hardware interface 106 may enable the computational system 104 to control and/or communicate with other components of the vehicle testing system 100 if they are present. The computational system 104 is further in communication with an optional user interface 108 that may enable an operator or user to control the operation and function of the vehicle testing system 100.

The computational system 104 is in further communication with a memory 110. The memory 110 is intended to represent various types of memory which are accessible to the computational system 104. The memory 110 may for example be a non-transitory storage medium.

The memory 110 is shown as containing machine-executable instructions 120. The machine-executable instructions 120 enable the computational system 104 to operate the various components of the vehicle testing system 100 as well as perform various numerical and image processing tasks. The memory 110 is shown as storing a roadway image 122 that was received. The roadway image 122 may comprise a sub-image of a traffic object 124. The memory 110 may also contain a bounding box 126 that identifies the location of the traffic object 124 within the roadway image 122. The memory 110 is further shown as containing an optional image classifier 128. The optional image classifier 128 may for example be a convolutional neural network or other neural network which is able to identify the location of the traffic object 124 in the roadway image 122 and provide the bounding box 126. In other examples the bounding box 126 may for example be received from the user interface 108.

The memory 110 is further shown as storing a text specification of a camera flight 130 around the traffic object 124. The memory 110 is further shown as containing a traffic object video 132 of the traffic object 124. The traffic object video 132 was generated by inputting the bounding box 126, the roadway image 122 and the text specification of the camera flight 130 into a text2video artificial intelligence module 134.

The memory 110 is further shown as containing a three-dimensional model 136 that was generated by inputting the traffic object video 132 and, in some examples, the text specification of the camera flight 130 into an image to three-dimensional model module 138. The three-dimensional model 136 may then be used for training automated control modules by inserting them or using them to modify sequences of traffic images.

The memory 110 is further shown as containing an optional traffic object database 140 which may be used to store the three-dimensional model 136 and also other three-dimensional models 136 generated using this vehicle testing system 100. This for example would be useful in generating or providing three-dimensional models 136 that can be used or inserted on the fly into sequences of traffic images for training an ECU.

The memory 110 is further shown as containing an optional segmentation algorithm 142. The optional segmentation algorithm 142 may for example be used to segment the ground of the roadway image 122 away so that only the traffic object 124 remains. This may for example, in some instances, facilitate the generation of the three-dimensional model 136.

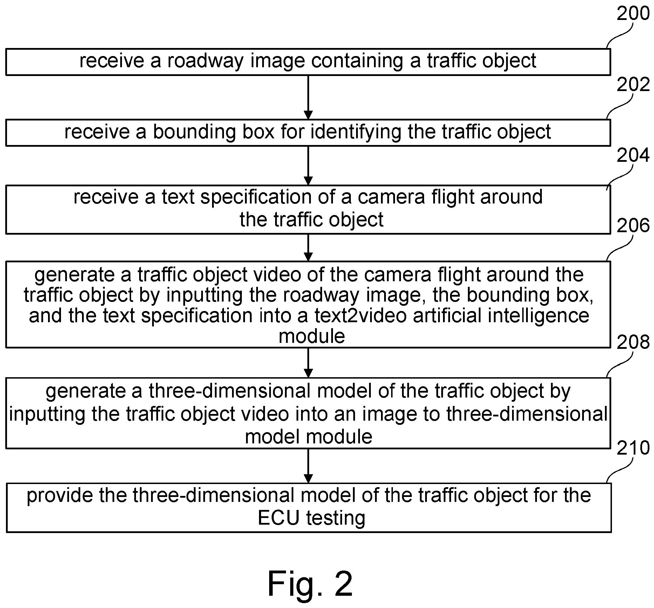

Fig. 2 shows a flowchart which illustrates a method of operating the vehicle testing system 100 of Fig. 1. In step 200, the roadway image 122 containing the traffic object 124 is received. In step 202, the bounding box 126 for identifying the traffic object 124 is received. In step 204, the text specification of the camera flight 130 of a camera flight around the traffic object 124 is received. In step 206, the traffic object video 132 is generated for the flight around the traffic object by inputting the roadway image 122, the bounding box 126, and the text specification into a text2video artificial intelligence module 134. In step 208, the three-dimensional model 136 is generated of the traffic object 124 by inputting the traffic object video 132 into the image to three-dimensional model module 138. In step 210, the three-dimensional model 136 of the traffic object 124 is provided for the ECU testing.

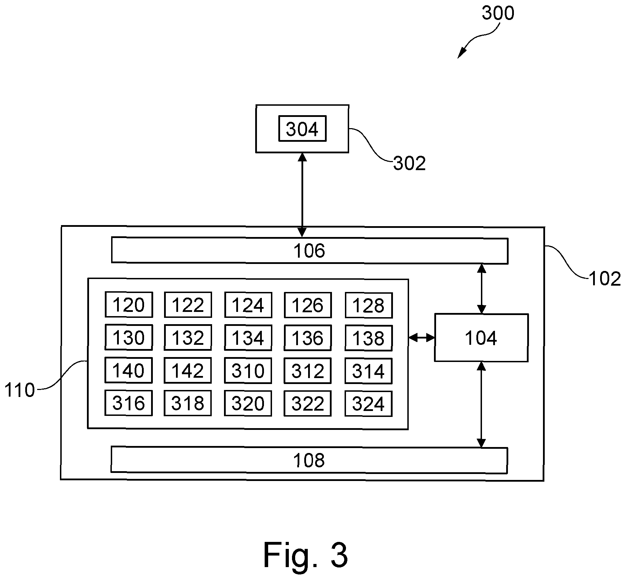

Fig. 3 illustrates a further example of a vehicle testing system 300. In this case the hardware interface 106 is in communication with an ECU 302. The ECU 302 implements an automated control module 304 that is configured for controlling a portion or some components of a vehicle. For example, the automated control module 304 may be an automated driving system or a driver assistance module. Fig. 3 illustrates an example of a hardware-in-the-loop configuration of testing an ECU 302. The ECU 302 could also be simulated instead of having the hardware interface 106 talk to a physical ECU 302 module.

The memory 110 is further shown as storing a sequence of traffic images 310. The sequence of traffic images 310 may for example be images acquired in traffic which are then used to train various functions of the automated control module 304. The memory 110 is further shown as storing a trajectory of the traffic object 312 in the sequence of traffic images 310. This trajectory 312 may for example define the orientation, and location of the three-dimensional model 136 in the various images or frames of the sequence of traffic images 310. The memory 110 is further shown as optionally containing the video editing module 316 that may be used to insert the three-dimensional model 136 to the sequence of modified traffic images 314 using the trajectory 312. The video editing module 316 may perform various tasks such as scaling, rotating, shading, and adjusting the light and appearance of the three-dimensional model 136.

The memory 110 is shown as containing an optional image sequence library that may provide image sequences for ECU 302 testing. For example, after the sequence of modified traffic images 314 were generated, they may be stored in the image sequence library 318 for further use. The vehicle testing system 300 may be used to repeatedly generate various sequences of modified traffic images 314. Because the system allows the three-dimensional objects to be freely placed and positioned into the sequence of traffic images 310, in some cases even the same sequence of traffic images 310 may be used to generate different scenarios for ECU 302 testing.

The memory 110 is further shown as storing a simulation program 320. The simulation program 320 takes as input the sequence of modified traffic images 314 and then uses this to simulate driving for the ECU 302. This enables testing of the automated control module 304 using the sequence of modified traffic images 314.

The memory 110 is further shown as containing detected faults 322 or training data that was generated by testing the automated control module 304 with the simulation program 320 and the sequence of modified traffic images 314. These detected faults 322 may be used to modify the programming or weighting factors in the simulation program 320. The memory stores modification commands 324 which may be used to modify the automated control module 304. This may include such things as adjusting parameters of the automated control module 304. In the case where the automated control module 304 contains one or more artificial intelligence modules the modification commands 324 may for example be used as training data in combination with the detected faults 322.

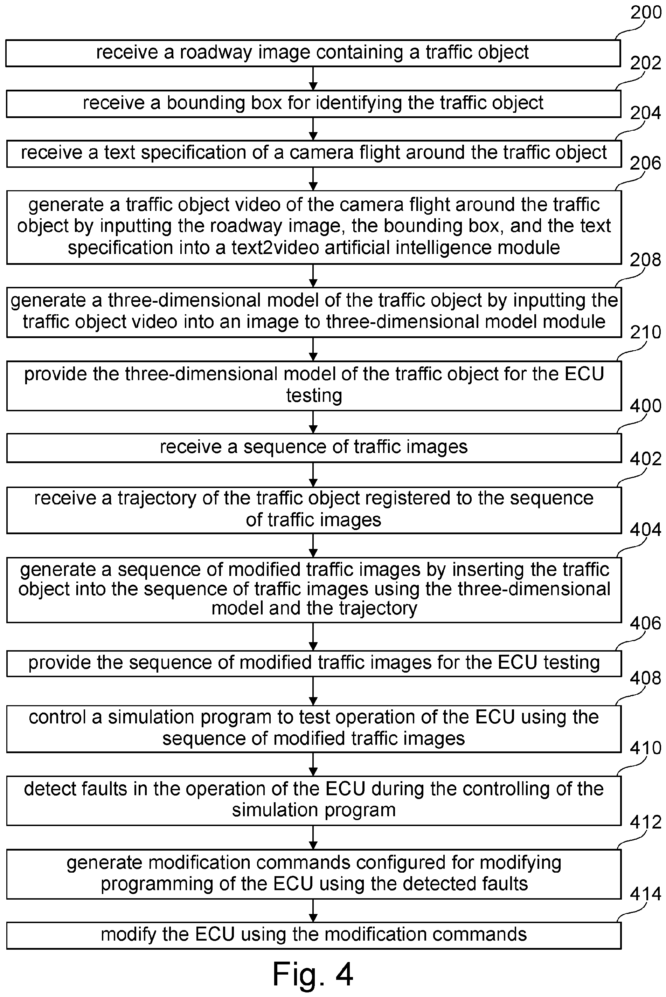

Fig. 4 shows a flowchart which illustrates a method of operating the vehicle testing system 300 of Fig. 3. Steps 200-210 are performed as was illustrated in Fig. 2. In step 400, the sequence of traffic images 310 is received. In step 402, the trajectory 312 of the traffic object 124 is received. The trajectory 312 is registered to the sequence of traffic images 310. In step 404, the sequence of modified traffic images 314 is generated by inserting the traffic object 124 into the sequence of modified traffic images 314 using the three-dimensional model 136 and the trajectory 312. In step 406, the sequence of modified traffic images 314 are provided for the ECU 302 testing. This may for example include storing the sequences in the image sequence library 318. In step 408, the simulation program 320 is controlled to test the operation of the ECU 302 using the sequence of modified traffic images 314. Step 408 is a test of the automated control module 304. In step 410, faults 322 are detected in the operation of the ECU 302 and the automated control module 304 during the controlling of the simulation program 320. In step 412, modification commands 324 are generated. The modification commands are configured for modifying programming of the ECU 302 or the automated control module 304 using the detected faults 322. In step 414, the ECU 302 and/or the automated control module 304 are modified using the modification commands 324.

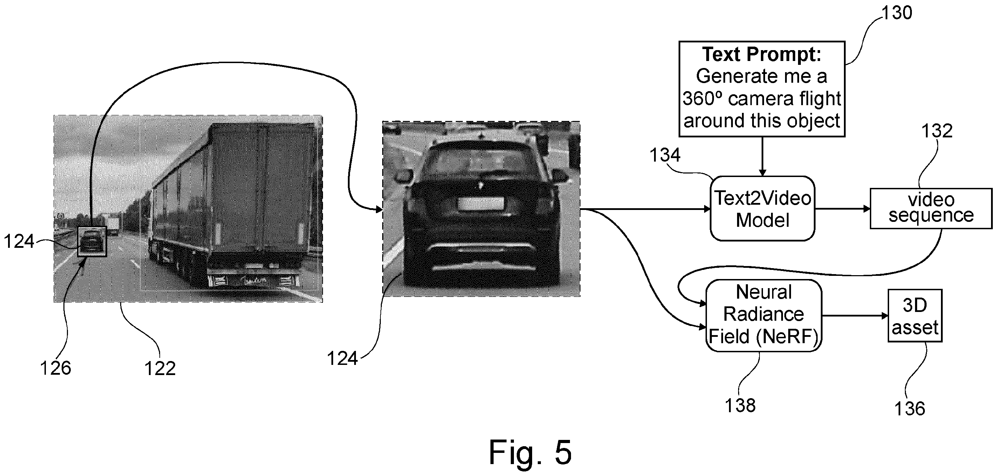

Fig. 5 shows a functional diagram which illustrates the generation of the three-dimensional model 136 from the roadway image 122. The roadway image 122 depicts a roadway scene with several vehicles which are identified by bounding boxes. Bounding box 126 marks the location of the traffic object 124. Adjacent to the roadway image 122 is a better view of the contents of the bounding box 126 and clearly show the traffic object 124, which in this case is an automobile. In this example, each of the traffic objects 124 is input into a text video model 134 that is controlled by the text specification 130 of the camera flight. This outputs the traffic object video 132. The traffic object video 132 and the original traffic object 124 are input into the image to three-dimensional model module 138. In some examples the traffic object 124 is not input into the image to three-dimensional model module because this may be included in the video sequence 132. The image to three-dimensional model module 138 then generates the three-dimensional model 136. This three-dimensional model 136, as was described above, may be freely inserted into sequences of traffic images 310.

While the invention has been illustrated and described in detail in the drawings and foregoing description, such illustration and description are to be considered illustrative or exemplary and not restrictive; the invention is not limited to the disclosed examples.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further understood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

### REFERENCE SIGNS LIST

100 vehicle testing system
102 computer
104 computational system
106 hardware interface
108 user interface
110 memory
120 machine executable instructions
122 roadway image
124 traffic object
126 bounding box
128 image classifier
130 text specification of camera flight
132 traffic object video
134 text2video artificial intelligence module
136 three-dimensional model
138 image to three-dimensional model module
140 traffic object database
142 segmentation algorithm
200 receive a roadway image containing a traffic object
202 receive a bounding box for identifying the traffic object
204 receive a text specification of a camera flight around the traffic object
206 generate a traffic object video of the camera flight around the traffic object by inputting the roadway image, the bounding box, and the text specification into a text2video artificial intelligence module
208 generate a three-dimensional model of the traffic object by inputting the traffic object video into an image to three-dimensional model module
210 provide the three-dimensional model of the traffic object for the ECU testing
300 vehicle testing system
302 ECU
304 automated control module
310 sequence of traffic images
312 trajectory of the traffic object
314 sequence of modified traffic images
316 video editing module
318 image sequence library
320 simulation program
322 detected faults (training data)
324 modification commands
400 receive a sequence of traffic images
402 receive a trajectory of the traffic object registered to the sequence of traffic images
404 generate a sequence of modified traffic images by inserting the traffic object into the sequence of traffic images using the three-dimensional model and the trajectory
406 provide the sequence of modified traffic images for the ECU testing
408 control a simulation program to test operation of the ECU using the sequence of modified traffic images
410 detect faults in the operation of the ECU during the controlling of the simulation program
412 generate modification commands configured for modifying programming of the ECU using the detected faults
414 modify the ECU using the modification commands

## Claims

1. A method of testing an ECU (302), wherein the ECU comprises an automated control module (304) adapted for controlling components of a vehicle, wherein the method comprises:
- receiving (200) a roadway image (122) containing a traffic object (124);
- receiving (202) a bounding box (126) for identifying the traffic object;
- receiving (204) a text specification (130) of a camera flight around the traffic object;
- generating (206) a traffic object video (132) of the camera flight around the traffic object by inputting the roadway image, the bounding box, and the text specification into a text2video artificial intelligence module (134);
- generating (208) a three-dimensional model (136) of the traffic object by inputting the traffic object video into an image to three-dimensional model module (138); and
- providing (210) the three-dimensional model of the traffic object for the ECU testing.

2. The method of claim 1, wherein the method further comprises:
- receiving (400) a sequence (310) of traffic images;
- receiving (402) a trajectory (312) of the traffic object registered to the sequence of traffic images;
- generating (404) a sequence (310) of modified traffic images by inserting the traffic object into the sequence of traffic images using the three-dimensional model and the trajectory; and
- providing (406) the sequence (314) of modified traffic images for the ECU testing.

3. The method of claim 2, wherein providing the sequence of modified traffic images for the ECU testing comprises:
- controlling (408) a simulation program (320) to test operation of the ECU using the sequence of modified traffic images; and
- detecting (410) faults (322) in the operation of the ECU during the controlling of the simulation program.

4. The method of claim 3, wherein the method further comprises:
- generating (412) modification commands (324) configured for modifying programming of the ECU using the detected faults; and
- modifying (414) the ECU using the modification commands.

5. The method of claim 2, 3, or 4, wherein providing the sequence of modified traffic images for the ECU testing comprises adding the sequence of modified traffic images to an image sequence library (318) designated for the ECU testing.

6. The method sequence of any one of claims 2 through 5, wherein the insertion of the traffic object into the sequence of traffic images is performed using a video editing module, wherein the method further comprises:
- determining a camera view position of the sequence of traffic images using the video editing module; and
- positioning the traffic object in the in the sequence of traffic images by controlling the video editing module with the trajectory of the traffic object and the camera view position to provide the sequence of modified traffic images.

7. The method of any one of the preceding claims, wherein the method further comprises performing any one of the following to the sequence of modified traffic images using the video editing module: shading the inserted traffic object, lighting the inserted traffic object, shadow catching the inserted traffic object, adding motion blur to the inserted traffic object, and combinations thereof.

8. The method of any one of the preceding claims, wherein the image to three-dimensional model module is a NeRF model.

9. The method of any one of claims 1 through 7, wherein the image to three-dimensional model module is any one of the following: a photogrammetry model, a multi-view stereo model, a deep learning based three-dimensional reconstruction, gaussian splatting model, and a mesh-based model.

10. The method of any one of the preceding claims, wherein the method further comprises controlling the generation of the three-dimensional model using the text specification of the camera flight around the traffic object.

11. The method of any one of the preceding claims, wherein the method further comprises:
- receiving a traffic object segmentation identifying a boundary of the traffic object in the roadway image by inputting the bounding box and the traffic image into a segmentation module (142); and
- removing a background of the traffic object using the traffic object segmentation before generating the three-dimensional model of the traffic object.

12. The method of any one of the preceding claims, wherein the method further comprises storing the three-dimensional object in a traffic object database (140) designated for the ECU testing.

13. A vehicle testing system (100, 300) comprising:
- a memory (110) storing machine executable instructions (120);
- a computational system (104), wherein execution of the machine executable instructions causes the computational system to perform the method of any one of claims 1 through 12.

14. A computer program comprising machine executable instructions (120) configured for causing a computational system (104) to perform the method of any one of claims 1 through 12.
